# FASCICULE DE BREVET EUROPEEN

(11) **EP 1 922 273 B1**
(45) Date de publication et mention de la délivrance du brevet: **26.11.2008**
(21) Numéro de dépôt: 06792944.8
(22) Date de dépôt: 22.08.2006
(51) Int. Cl.: B65G 47/84, B29C 49/42, B29C 49/36

(54) **DISPOSITIF DE CHARGEMENT OU DE DECHARGEMENT DE RECIPIENTS COMPORTANT UN COL SUR UN ELEMENT DE TRANSPORT**
VERFAHREN ZUM LADEN ODER ENTLADEN VON BEHÄLTERN MIT EINEM HALS AUF EIN TRANSPORTELEMENT
DEVICE FOR LOADING OR UNLOADING CONTAINERS COMPRISING A NECK ON A TRANSPORTING ELEMENT

(30) Priorité: 29.08.2005 FR 0552590
(43) Date de publication de la demande: 21.05.2008
(73) Titulaire: SIDEL PARTICIPATIONS, 76930 Octeville-sur-Mer (FR)
(72) Inventeur: LEBLOND, Régis, F-76930 Octeville Sur Mer (FR); GILLET, Denis, F-76930 Octeville Sur Mer (FR)
(74) Mandataire: Kohn, Philippe
(86) Numéro de dépôt international: PCT/EP2006/065555
(87) Numéro de publication internationale: WO 2007/025909

(56) Documents cités:
- US-A- 3 637 074
- PATENT ABSTRACTS OF JAPAN vol. 2003, no. 12, 5 décembre 2003 (2003-12-05) & JP 2004 276372 A (TOYO SEIKAN KAISHA LTD), 7 octobre 2004 (2004-10-07)
- PATENT ABSTRACTS OF JAPAN vol. 2003, no. 12, 5 décembre 2003 (2003-12-05) & JP 2004 299350 A (NISSEI ASB MACH CO LTD), 28 octobre 2004 (2004-10-28)

## Description

L'invention concerne un dispositif de chargement ou de déchargement de récipients comportant un col sur un élément de transport.

L'invention concerne plus particulièrement un dispositif de chargement ou de déchargement de récipients comportant un col, et notamment de préformes en matériau thermoplastique, sur un élément de transport qui comporte au moins un organe de préhension individuelle d'une préforme par son col, et qui est apte à transporter la préforme le long d'une trajectoire de transport horizontale, le dispositif de chargement ou de déchargement comportant les caractéristiques mentionnées dans le preambule de la revendication 1, connues du document JP 2004 276372.

La présente invention concerne des perfectionnements apportés aux dispositifs de chargement de récipients ou de préformes présentant un col, notamment de bouteilles, sur un élément de transport qui est équipé d'organes de préhension individuelle des récipients par leur col. Ces organes de préhension sont mutuellement espacés d'un pas prédéterminé et les récipients sont amenés au dispositif de chargement les uns à la suite des autres en étant espacés du pas prédéterminé.

Ces dispositifs de chargement sont notamment adaptés aux installations de fabrication et/ou de remplissage de récipients. Ainsi, dans les installation de fabrication de récipients, des préformes sont transportées par un tel élément de transport à travers un four de préchauffage avant que les préformes ainsi chauffées ne soient transformées en récipient par une opération de soufflage.

Dans ce type d'installation, l'acheminement des préformes jusqu'à l'élément de transport est couramment assuré par des roues de transfert dont de nombreuses réalisations sont connues.

Les préformes sont chargées sur l'élément lors d'une opération de préhension, au cours de laquelle le mandrin est enfoncé à force dans le col de la préforme que les roues de transfert supportent.

Par ailleurs, dans les fours de chauffage de la matière thermoplastique constitutive des préformes, qui sont utilisés dans les installations de fabrication des récipients, le transfert des préformes peut être assuré par des plateaux à encoches ou à pinces qui saisissent les préformes et les amènent sous les mandrins en déplacement.

On connaît déjà des installations de ce type, notamment par le document EP-A-0.573.352.

Dans ces installations connues, la trajectoire des mandrins en projection plane est tangente en un unique point d'intersection avec la trajectoire des préformes portées par la roue de transfert.

L'entraînement en rotation de la roue de transfert et l'entraînement en translation des organes de préhension sont synchronisés de manière qu'un organe de préhension et une préforme portée par la roue de transfert se présentent en synchronisme au point d'intersection, à l'aplomb l'un de l'autre. En cet unique point d'intersection, l'opération de préhension est réalisée. La descente du mandrin préalablement remonté en position effacée et son emmanchement dans le goulot de la préforme sous-jacente sont commandés par exemple par un système de cames.

Cependant, l'opération de préhension doit être réalisée très rapidement car les préformes ne croisent la trajectoire des mandrins qu'en un seul point. Une telle opération de préhension n'est pas adaptée pour une cadence de fonctionnement élevée du dispositif de chargement. En effet, plus la vitesse de l'élément de transport est élevée, plus l'opération de préhension doit être réalisée rapidement. Cependant, à cadence élevée, le mandrin est susceptible d'être insuffisamment emmanché dans le col de la préforme. La préforme risque alors de tomber du mandrin.

Pour résoudre ce problème, l'invention propose un dispositif de chargement plus fiable et moins onéreux qui est caractérisé en ce que la trajectoire des moyens de réception et la trajectoire des organes de préhension en projection plane sont superposées et synchronisées le long d'au moins une ligne d'intersection de manière que la préforme soit maintenue dans sa position de préhension tout au long de la ligne d'intersection.

Selon d'autres caractéristiques de l'invention :
- les organes de préhension sont montés coulissant verticalement par rapport à la préforme entre une position haute de préhension et une position basse de transfert ;
- les moyens de réception des préformes sont montés coulissant verticalement de manière à faire coulisser les préformes entre une position basse de transfert dans laquelle la préforme est dégagée de l'organe de préhension et une position haute de préhension dans laquelle la préforme est saisie par l'organe de préhension ;
- le dispositif de chargement ou de déchargement comporte des moyens de commande du coulissement des moyens de réception par rapport à l'organe de préhension de manière que le coulissement des moyens de réception par rapport à l'organe de préhension associé d'une position vers l'autre s'effectue progressivement tout au long de la ligne d'intersection ;
- la trajectoire des organes de préhension le long de la ligne d'intersection est circulaire autour d'un axe de rotation vertical d'entraînement, les moyens de réception étant agencés à la périphérie d'un plateau rotatif dont l'axe de rotation correspond audit axe de rotation vertical d'entraînement ;
- l'élément de transport est une chaîne sans fin dont une portion courbe est enroulée autour d'une roue d'entraînement, le plateau étant formé par la roue d'entraînement ;
- les moyens de réception sont des pinces qui est apte à saisir le récipient par son col par emboîtement élastique réversible de la préforme dans la pince ;
- le dispositif de chargement comporte des moyens d'éjection comportant des moyens pour commander sélectivement l'opération de libération des préformes mal prises par rapport à l'organe de préhension, les préformes mal prises étant sélectivement libérées de l'emprise de l'organe de préhension sur un tronçon aval de la ligne d'intersection en étant maintenues par les moyens de réception ;
- les moyens d'éjection comportent des moyens pour faire tomber les préformes mal prises qui sont en position basse de transfert après l'opération de libération ;
- les moyens d'éjection comportent un sabre qui est interposé sur la trajectoire du col des préformes en position basse de transfert après l'opération de libération.

D'autres caractéristiques et avantages apparaîtront au cours de la lecture de la description détaillée qui va suivre pour la compréhension de laquelle on se reportera aux dessins annexés parmi lesquels :
- la figure 1 est une vue en plan qui représente un dispositif de chargement et de déchargement qui est réalisé selon les enseignements de l'invention ;
- la figure 2 est une vue de côté à plus grande échelle qui représente des préformes qui sont saisies par des mandrins portés par une chaîne de transport ;
- la figure 3 est une vue similaire à celle de la figure 1 à plus grande échelle qui représente une zone de chargement des préformes sur la chaîne de transport ;
- la figure 4 est une vue schématique de coté qui représente des préformes durant l'opération de préhension par les mandrins ;
- la figure 5 est une vue similaire à celle de la figure 4 qui représente le cheminement d'une préforme qui est mal prise par un mandrin.

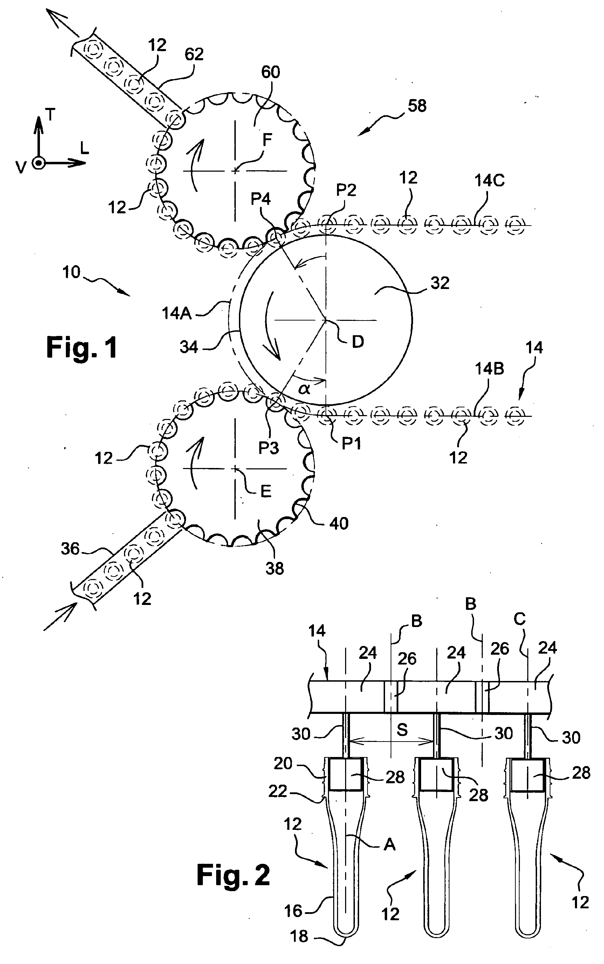

Dans la suite de la description, on utilisera à titre non limitatif une orientation longitudinale, verticale et transversale qui est indiquée par le trièdre L,V,T de la figure 1.

Par la suite, des éléments identiques, analogues ou similaires seront désignés par des mêmes numéros de référence.

On a représenté à la figure 1 un dispositif de chargement 10 de récipients 12 sur un élément de transport 14.

Les récipients 12 sont ici des préformes qui sont constituées d'un matériau thermoplastique, tel que du polyéthylène téréphtalate (PET), et qui sont destinées à être transformées en récipients, tel que des bouteilles, après une première opération de chauffage pour ramollir le thermoplastique les constituant, puis une seconde opération de soufflage ou d'étirage-soufflage, pour conformer la préforme 12 en récipient.

De façon connue, chaque préforme 12 a une forme d'éprouvette ou de tube à essai d'axe vertical "A". Comme représentée à la figure 2, le corps tubulaire 16 de la préforme 12 est fermé à son extrémité inférieure par un fond hémisphérique 18 tandis que son extrémité supérieure comporte un col 20 qui forme le goulot du récipient définitif.

La jonction entre le corps tubulaire 16 et le col 20 est délimitée par une collerette 22 qui s'étend horizontalement en saillie vers l'extérieur. La face cylindrique externe 20 du col comporte ici un pas de vis qui est destiné à recevoir un bouchon fileté (non représenté) afin de fermer le récipient.

L'élément de transport 14 des préformes 12 est ici un élément flexible tel qu'une chaîne sans fin de transport qui forme une boucle fermée s'étendant dans un plan horizontal. Comme représenté à la figure 2, la chaîne de transport 14 comporte une pluralité de maillons 24 qui sont articulés les uns aux autres par l'intermédiaire de charnières 26 d'axe vertical "B".

L'élément de transport 14 comporte une pluralité d'organes de préhension 28 qui sont ici des mandrins. Chaque mandrin 28 est porté par un maillon 24 de la chaîne de transport 14. Les mandrins 28 sont espacés d'un pas prédéterminé "S" qui correspond ici à la distance entre les charnières 26 d'un maillon 24.

Chaque mandrin 28 est plus particulièrement porté par une tige 30, aussi appelée tournette, d'axe vertical "C" qui s'étend verticalement vers le bas depuis le milieu d'une face inférieure du maillon 24.

L'extrémité inférieure de chaque tige 30 porte le mandrin 28 qui comporte une pluralité de mors (non représentés) qui sont mobiles radialement par rapport à l'axe "C" du mandrin entre une position rétractée dans laquelle le mandrin 28 est apte à être inséré à l'intérieur du col 20 d'une préforme 12, et une position expansée dans laquelle les mors sont aptes à exercer une pression radiale contre la paroi cylindrique interne du col 20 de la préforme 12 afin que la préforme 12 soit fixée par friction au mandrin 28. Les mors sont rappelés élastiquement vers leur position expansée.

Ainsi, lors d'une opération de préhension de la préforme 12 par le mandrin 28, le mandrin 28 est inséré à force verticalement à l'intérieur du col 20 de la préforme 12 par coulissement vertical relatif du mandrin 28 par rapport à la préforme 12, ce qui provoque une rétraction des mors à l'encontre de la force de rappel élastique.

Dans le mode de réalisation représenté aux figures 2, 4 et 5, la tige 30 est montée à rotation autour de son axe "C" par rapport au maillon 24 afin de pouvoir faire tourner la préforme 12 sur elle-même autour de l'axe "C" lors de son transport par la chaîne de transport 14.

Comme représenté à la figure 1, la chaîne de transport 14 est ici entraînée en rotation ou au moins guidée en rotation, par une roue d'entraînement 32. La roue d'entraînement 32 est montée à rotation autour de son axe central vertical "D" et elle est entraînée en rotation dans un sens anti-horaire en se référant à la figure 1.

Une portion courbe 14A de la chaîne de transport 14 est enroulée autour d'une portion de jante périphérique 34 de la roue d'entraînement 32. La portion courbe 14A de chaîne de transport 14 forme ici un demi-cercle.

La chaîne de transport 14 comporte aussi une portion rectiligne aval ou brin aval 14B qui est agencée tangentiellement à la roue d'entraînement 32 en aval de la portion courbe 14A selon le sens de rotation anti-horaire de la chaîne de transport 14.

La chaîne de transport 14 comporte aussi une portion rectiligne amont ou brin amont 14C qui est agencée tangentiellement à la roue d'entraînement en amont de la portion courbe 14A selon le sens de rotation anti-horaire de la chaîne de transport 14.

La chaîne de transport 14 est apte à transporter successivement chaque préforme 12 portée par un mandrin 28 depuis un point d'entrée "P1" au niveau duquel la préforme 12 est prise par le mandrin 28, jusqu'à un point de sortie "P2" au niveau duquel la préforme 12 est libérée du mandrin 28, le long d'une trajectoire de transport en passant à travers au moins une zone de chauffage (non représentée).

Afin que le pas prédéterminé "S" entre les mandrins 28 soit le même tout le long de la chaîne de transport 14, aussi bien sur les brins rectilignes 14B, 14C que sur la portion courbe, l'axe "C" des mandrins et l'axe "B" des charnières suivent une unique trajectoire commune le long de la chaîne.

Le dispositif de chargement 10 comporte des moyens d'alimentation en préformes 12 qui sont destinés à acheminer les préformes 12 les unes à la suite des autres jusqu'à la chaîne de transport 14 par l'intermédiaire de moyens de distributions des préformes 12 aux organes de préhension 28 qui seront décrits plus en détail par la suite.

Les moyens d'alimentation comportent ici une glissière 36 et une roue de transfert d'entrée 38 qui est montée à rotation autour de son axe central vertical "E".

La roue de transfert d'entrée 38 comporte des encoches de réception 40 des cols 20 des préformes 12 qui sont mutuellement espacées circonférentiellement du pas prédéterminé "S". Ces encoches 40 sont aptes à recevoir les cols 20 des préformes 12 arrivant par la glissière 36 et à soutenir les préformes 12 grâce à leur collerette 22 saillante qui prend appui sur le bord des encoches 40.

Ainsi, la glissière 36 guide successivement chaque préforme 12 jusqu'à la roue de transfert d'entrée 38 de manière à distribuer chaque préforme 12 dans une encoche 40 associée.

Les encoches 40 de la roue de transfert d'entrée 38 sont ici agencées à une altitude inférieure à celle des mandrins 28 de la chaîne de transport 14.

Comme représenté à la figure 1, en projection plane, la roue de transfert d'entrée 38 est ici agencée de manière tangente à la portion courbe 14A de la chaîne de transport 14 en un premier point d'intersection "P3".

La roue de transfert d'entrée 38 est entraînée en rotation autour de son axe "E" selon un sens horaire en se reportant à la figure 1. La vitesse de rotation de la roue d'entraînement d'entrée 38 est synchronisée avec la vitesse de rotation de la chaîne de transport 14 de manière qu'un organe de préhension 28 et une encoche 40 de la roue de transfert d'entrée 38 se présentent en synchronisme au premier point d'intersection "P3" à l'aplomb l'un de l'autre.

Selon les enseignements de l'invention, le dispositif de chargement 10 comporte aussi des moyens de distribution des préformes 12 qui sont notamment destinés à maintenir les préformes 12 durant l'opération de préhension par les mandrins 28.

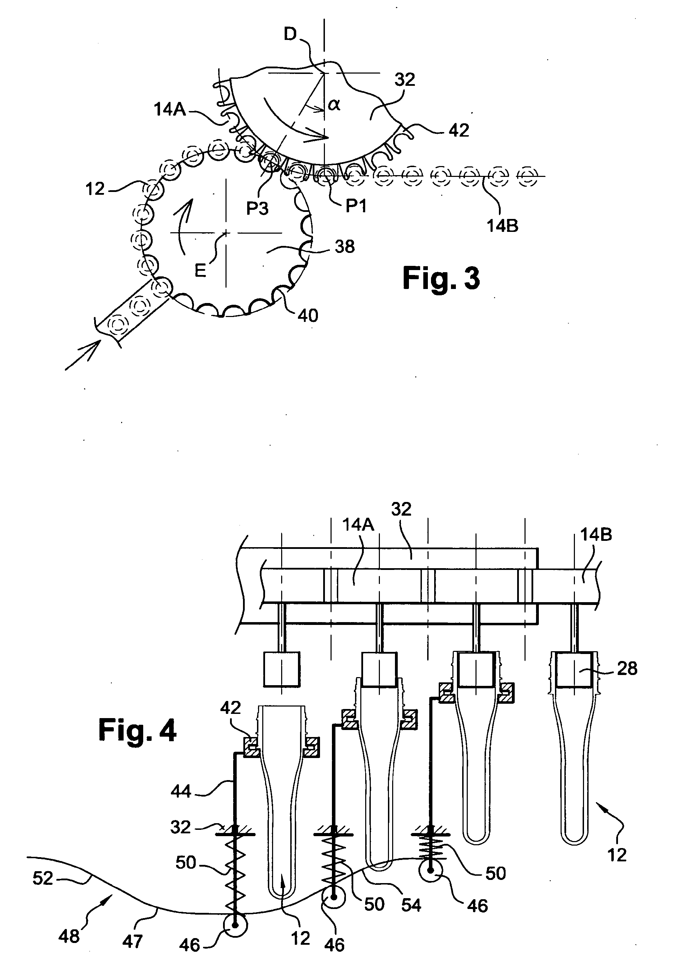

A cet effet, la roue d'entraînement 32 comporte des moyens de réception 42 tels que des pinces comme représenté à la figure 3. Il s'agit ici de pinces 42 rigides dont les mâchoires qui sont immobiles l'une par rapport à l'autre délimitent un logement de forme complémentaire à la forme du col 20 de chaque préforme 12. Les préformes 12 étant réalisée dans un matériau déformable élastiquement, le col 20 de la préforme est emboîté élastiquement de manière réversible entre les mâchoires de la pince 42.

Selon une variante non représentée de l'invention, les pinces 42 ont des mâchoires qui sont articulées entre une position fermée et une position ouverte, les mâchoires étant rappelées élastiquement vers leur position fermée.

Selon une variante non représentée de l'invention, les pinces sont portées par un plateau d'axe coaxial à l'axe "D" de la roue d'entraînement 32.

Les pinces 42 sont réparties sur toutes la circonférences de la roue d'entraînement 32, sensiblement à la même altitude que les encoches 40 de la roues de transfert d'entrée 38. Les pinces 42 sont espacées circonférentiellement les unes des autres du pas prédéterminé "S" de manière qu'une pince 42 soit agencée axialement sous chaque mandrin 28 de la portion courbe 14A de la chaîne de transport 14.

Ainsi, en projection plane la trajectoire circulaire des pinces 42 est superposée à la trajectoire des mandrins 28 tout au long de la portion courbe 14A de la chaîne de transport 14. En d'autres termes, en projection plane, la trajectoire des mandrins 28 est confondue avec la trajectoire des pinces 42 tout au long de la portion courbe 14A de la chaîne de transport 14.

Comme représenté à la figure 4, chaque pince 42 est destinée à saisir une préforme 12 de part et d'autre de la collerette 22 de façon à maintenir cette préforme durant l'opération de préhension de la préforme 12 par le mandrin 28.

Chaque mâchoire de la pince 42 comporte une gorge qui s'étend radialement par rapport à l'axe "A" de la préforme dans la paroi interne de la mâchoire afin de recevoir la collerette 22. La préforme 12 est ainsi soutenue par la paroi inférieure horizontale de la gorge. La paroi horizontale supérieure de la gorge bloque les déplacements de la préforme 12 vers le haut par rapport à la pince 42. Ainsi, lorsque la collerette 22 est reçue dans la gorge complémentaire de la pince 42, la préforme 12 est bloquée en déplacement vertical dans les deux sens par rapport à la pince 42.

Chaque pince 42 passe au premier point d'intersection "P3" de la roue de transfert d'entrée 38 et de la chaîne de transport 14, en synchronisme avec une encoche 40 de la roue de transfert d'entrée 38. Les pinces 42 étant agencées sensiblement à la même altitude que l'encoche 40, la pince 42 est apte à saisir la préforme 12, de part et d'autre de la collette 22, portée par l'encoche 40. La préforme 12 est ainsi transférée depuis la roue de transfert d'entrée 38 sur la roue d'entraînement 32.

Lorsque la préforme 12 est saisie par la pince 42, elle occupe une position dite de préhension dans laquelle l'axe "A" de la préforme 12 est coaxial à l'axe "C" des mandrins 28, les mandrins étant ainsi agencés en vis-à-vis du col 20 de la préforme 12.

Le premier point d'intersection "P3" est agencé sur la portion courbe 14A de la chaîne 14, en amont du point d'entrée "P1" qui est agencé sur la portion courbe 14A de la chaîne 14 en aval du premier point d'intersection "P3", par exemple à l'extrémité aval de la portion courbe 14A. Ainsi, l'opération de préhension dure avantageusement le temps que la pince 42 parcoure un secteur angulaire "P3-P1" d'angle "α".

La trajectoire de la préforme 12 portée par la pince 42 et celle du mandrin 28 sont superposées le long du secteur angulaire "P3-P1" qui forme, en projection plane, une première ligne d'intersection entre la trajectoire des mandrins 28 et celle des pinces 42.

Ainsi, entre le premier point d'intersection "P3" et le point de départ "P1", la préforme 12 est maintenue par la pince 42 dans sa position de préhension au droit du mandrin 28,

Selon un autre aspect de l'invention, l'opération de préhension de la préforme 12 par le mandrin 28 nécessite un mouvement de coulissement vertical de la préforme 12 en position de préhension par rapport au mandrin 28.

Selon les enseignements de l'invention, les pinces 42 sont avantageusement montées coulissantes verticalement par rapport à la roue d'entraînement 32 entre une position basse de transfert dans laquelle la pince 42 est agencée à la même altitude que les encoches 40 de la roue de transfert d'entrée 38 et une position haute de chargement dans laquelle le col 20 de la préforme 12 portée par la pince 42 est à la même altitude que les mandrins 28 de manière que le mandrin 28 soit emmanché dans le col 20.

Comme représenté à la figure 4, le coulissement vertical de chaque pince 42 est ici commandé par un système de came. Ainsi, chaque pince comporte une tige de commande 44. Un galet 46 est monté à rotation à une extrémité inférieure libre de la tige de commande 44 de chaque pince 42.

Le galet 46 est destiné à coopérer avec un chemin de came 47 qui est ici porté par la surface inférieure d'un rail de préhension 48. Le rail de préhension 48 est fixe par rapport à la roue d'entraînement 32, c'est-à-dire que le rail de préhension 48 n'est pas entraîné en rotation par la roue d'entraînement 32.

De plus, chaque pince 42 est rappelée élastiquement vers sa position haute de chargement par un ressort de rappel 50, de sorte qu'il n'est pas nécessaire de prolonger le rail lorsque la pince 42 est en position haute de chargement.

Le chemin de came 47 comporte une première pente amont 52 qui est destinée à commander la descente de la pince 42 vers sa position basse de transfert. Le chemin de came 47 comporte aussi une deuxième pente aval 54 qui est destinée à commander la montée de la pince 42 vers sa position haute de chargement.

La deuxième pente amont 54 s'étend ici sur au moins une portion de la ligne d'intersection correspondant au secteur angulaire d'angle "α", de manière que l'opération de préhension puisse être réalisée pendant une durée suffisamment longue pour assurer un emmanchement fiable du mandrins 28 dans le col 20 de la préforme 12.

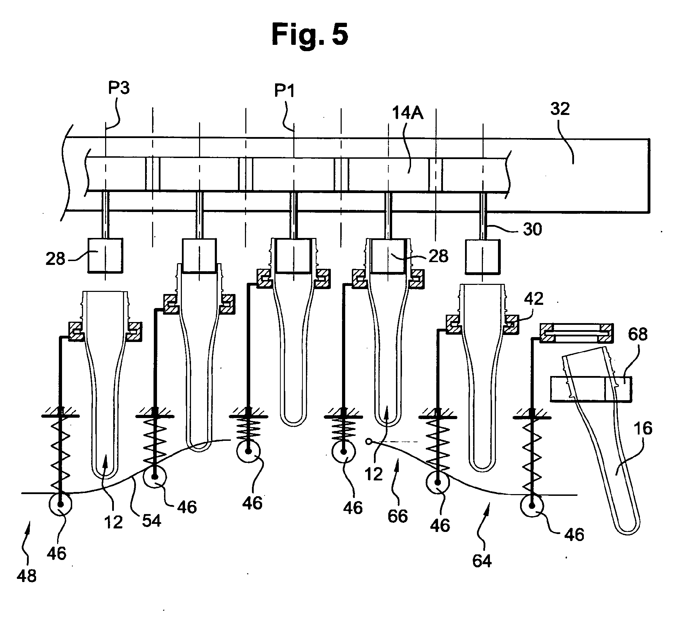

Selon encore un autre aspect de l'invention représenté à la figure 5, le dispositif de chargement 10 comporte des moyens pour éjecter une préforme 12 lorsqu'elle n'est pas correctement saisie par le mandrin 28, par exemple lorsque la préforme 12 est susceptible de tomber lors de son trajet le long de la chaîne de transport 14.

Dans ce cas, le point de départ "P1" des préformes est agencé en amont de l'extrémité aval de la portion courbe 14A de la chaîne de transport 14, de manière que les pinces 42 soient aptes à supporter temporairement les préformes 12 après qu'elles aient été prises par le mandrin 28 jusqu'à l'extrémité de la portion courbe 14A de la chaîne de transport 14.

A cet effet, le dispositif de chargement 10 comporte un capteur (non représenté) pour détecter les préformes 12 mal emmanchées. Le capteur est agencé de manière à détecter un défaut d'emmanchement lorsque la pince 42 est en position haute de chargement, c'est-à-dire lorsque la préforme 12 est saisie par le mandrin 28 et que son col 20 est toujours soutenu par la pince 42.

Les moyens d'éjection comportent aussi un deuxième rail d'éjection 64 qui comporte une pente descendante de manière à maintenir la pince 42 en position basse de transfert à l'encontre de l'effort exercé par le ressort de rappel 50 lorsque la préforme 12 est mal emmanchée.

Afin d'engager sélectivement les pinces 42 portant une préforme 12 mal emmanchée vers le rail d'éjection 64, le dispositif 10 comporte un rail d'aiguillage escamotable 66 qui est monté mobile entre une position escamotée dans laquelle il n'est pas interposé dans la trajectoire du galet 46 de manière que la pince 42 demeure en position haute de préhension, et une position active dans laquelle le rail d'aiguillage escamotable 66 est interposé sur la trajectoire du galet 46 de manière à orienter le galet 46 sous le rail d'éjection 64 afin d'abaisser la pince 42 vers sa position basse de transfert.

Lorsque le rail d'aiguillage escamotable 66 est en position active, la pince 42 est rappelée vers sa position basse de transfert par le rail d'éjection 64 en désolidarisant le col 20 par rapport au mandrin 28.

Le rail d'aiguillage escamotable 66 est ici une portion de rail qui est montée pivotant par rapport à son extrémité amont.

Selon une variante de l'invention, le rail d'aiguillage escamotable 66 est une portion de rail qui est montée coulissante verticalement entre une position haute escamotée et une position basse active.

Selon encore une autre variante de l'invention, le rail d'aiguillage escamotable 66 est une portion de rail qui est montée coulissante radialement par rapport à l'axe "D" de la roue d'entraînement 32, entre une position latérale externe escamotée et une position d'interposition interne active.

Lorsque la préforme 12 mal emmanchée ou mal prise est de nouveau dans sa position basse de transfert, elle est libérée de la pince 42 pour sortir du dispositif 10 et de l'installation 14. La préforme 12 est par exemple libérée de la pince 42 lorsqu'elle n'est plus située sous la chaîne de transport 14, après que les trajectoires des pinces 42 et des mandrins 28 aient divergées.

A cet effet, le dispositif comporte un premier sabre 68 qui est interposé dans la trajectoire du col 20 de la préforme 12 lorsque celle-ci a été aiguillée vers sa position basse de transfert par le rail d'aiguillage escamotable 66. Le sabre 68 est ici une plaque qui permet de libérer la préforme 12 de l'emprise de la pince 42 en provoquant le déboîtement de la préforme 12 par rapport à la pince 42.

Comme représenté à la figure 1, l'installation comporte aussi un dispositif de déchargement 58 qui est similaire au dispositif de chargement 10. Ainsi, le dispositif de déchargement 58 comporte une roue de transfert de sortie 60 et une glissière de sortie 62.

La roue de transfert de sortie 60 est agencée à la même altitude que la roue de transfert d'entrée 38, et elle comporte des encoches 40 identiques à celles de la roue de transfert d'entrée 38, et elle est montée à rotation dans un sens horaire autour d'un axe "F" de manière tangente à la roue d'entraînement 32 en un deuxième point d'intersection "P4".

Les pinces 42 de la roue d'entraînement 32 sont aptes à saisir les préformes 12 portées par les mandrins 28 en un point d'arrivée "P2" qui est ici agencé à l'extrémité amont de la portion courbe 14A de la chaîne de transport 14.

La vitesse de rotation de la roue de transfert de sortie 60 est aussi synchronisée avec la vitesse de rotation de la roue d'entraînement 32 de manière qu'une encoche 40 de la roue de transfert de sortie 60 passe en synchronisme avec une pince 42 de la roue d'entraînement 32 au deuxième point d'intersection "P4" qui est agencé en aval du point d'arrivée "P2".

En projection plane, la trajectoire des pinces 42 et la trajectoire des mandrins 28 sont superposées sur une deuxième ligne d'intersection "P2-P4" qui s'étend entre le point d'arrivée "P2" et le deuxième point d'intersection "P4".

Le deuxième point d'intersection "P4" est plus particulièrement agencé en amont du premier point d'intersection "P3" par rapport au sens de rotation de la roue d'entraînement 32.

Ainsi entre le moment auquel la préforme 12 est saisie au point « P3 » par une pince 42 et le moment auquel la préforme est transférée sur la roue de transfert de sortie 60 au deuxième point d'intersection "P4", la préforme 12 est maintenue par la pince 42 au droit du mandrin 28 associé.

Lors d'une opération de libération qui s'étend le long de la deuxième ligne d'intersection "P2-P4", la préforme 12 est libérées de l'emprise du mandrin 28 par un mouvement progressif de coulissement vertical vers le bas de la pince 42 qui débute sensiblement au point d'arrivée "P2" et qui se termine sensiblement au deuxième point d'intersection "P4".

Le dispositif de déchargement 58 comporte un deuxième sabre (non représenté) qui est apte à libérer la préforme de l'emprise de la pince 42.

Avantageusement, les mêmes pinces 42 servent donc successivement à maintenir les préformes en position de préhension lors de l'opération de préhension, puis lors de l'opération de libération.

Lors du fonctionnement d'une telle installation de chauffage, les préformes 12 sont acheminée l'une derrière l'autre par la glissière 36 jusqu'à chaque encoche 40 de la roue de transfert d'entrée 38. Puis la roue de transfert d'entrée transporte chaque préforme 12 jusqu'au premier point d'intersection "P3" avec l'élément de transport 14.

Une pince 42 qui est commandée par le rail de préhension vers sa position basse de transfert saisit alors automatiquement la préforme 12 de manière à maintenir la préforme 12 verticalement sous un mandrin 28 associé en position de préhension.

La préforme 12 est alors soutenue par la pince 42, et elle est solidaire en rotation de la roue d'entraînement 32.

La pince 42 est alors rappelée vers sa position haute de préhension par le ressort de rappel 50. Le retour de la pince 42 vers sa position haute de préhension est guidé progressivement par le roulement du galet 46 sous la pente aval 54 du rail de préhension 48. Ainsi, l'opération de préhension s'étend sur le secteur angulaire "P3-P1" d'angle "α" tout au long la trajectoire de la préforme 12 et la trajectoire du mandrin 28 sont superposées, la préforme 12 étant ainsi maintenue strictement verticalement au droit du mandrin 28 par la pince 42.

Lors de l'opération de préhension, la pince 42 monte progressivement la préforme 12 vers le mandrin 28 depuis sa position basse au premier point d'intersection "P3" jusqu'à ce que le mandrin 28 soit emmanché dans le col 20 de la préforme 12 lorsque la préforme 12 passe au point d'entrée "P1" de la trajectoire du mandrin 28.

Lorsque la trajectoire du mandrin 28 et la trajectoire de la pince 42 divergent, la préforme 12 se libère automatiquement de la pince 42, le mouvement divergent de la préforme 12 forçant le déboîtement du col 20 par rapport à la pince 42.

Puis la préforme 12 est transportée tout au long de sa trajectoire jusqu'à son point de sortie "P2" qui est agencé à l'extrémité amont de la portion courbe 14A de la chaîne de transport 14. A ce point, la préforme 12 est saisie par une pince 42 en position haute de préhension.

En projection plane, la pince 42 a une trajectoire "P2-P4" commune et tangente à la trajectoire du mandrin 28 de manière que la pince 42 soit au droit du mandrin 28 au moins entre le point de sortie "P2" auquel la préforme 12 est saisie par la pince 42, jusqu'au deuxième point d'intersection "P4" auquel la préforme 12 est transférée sur la roue de transfert de sortie 60.

Puis la pince 42 est commandée vers sa position basse par un rail de libération (non représenté) similaire au rail de préhension 48. La pince 42 appui sur la collerette 22 de manière à désengager le mandrin 28 du col 20 de la préforme 12. La préforme 12 est ainsi dégagée de l'emprise du mandrin 28.

La préforme 12 est descendue vers une position de transfert dans laquelle la collerette 22 de la préforme 12 est agencée à la même altitude que les encoches 40 de la roue de transfert de sortie 60.

La préforme 12 arrive en position de transfert au deuxième point d'intersection "P4" en synchronisme avec une encoche 40 de la roue de transfert de sortie 60 de manière que la préforme 12 soit transférée sur l'encoche 40 de la roue de transfert 60.

A cet effet, la préforme 12 est libérée de la pince 42 au deuxième point d'intersection "P4" au moyen du deuxième sabre ou d'un système de commande automatique.

## Revendications

1. Dispositif de chargement (10) ou de déchargement (58) de récipients (12) comportant un col (20), et notamment de préformes en matériau thermoplastique, sur un élément de transport (14) qui comporte au moins un organe de préhension individuelle (28) d'une préforme (12) par son col (20), et qui est apte à transporter la préforme (12) le long d'une trajectoire de transport horizontale, le dispositif de chargement (10) ou de déchargement (58) comportant :
- des moyens de distribution (32, 42) des préformes (12) qui comportent des moyens de réception individuelle (42) de chaque préforme (12) de manière à conduire successivement chaque préforme (12) le long d'une trajectoire de distribution de manière que la trajectoire des moyens de réception (42) et la trajectoire des organes de préhension (28), en projection plane, soient tangentes en au moins un point d'intersection (P3, P4) dans lequel la préforme (12) occupe une position de préhension dans laquelle le col (20) de la préforme (12) est agencé verticalement en vis-à-vis de l'organe de préhension (28),
- des moyens pour synchroniser le déplacement des moyens de réception (42) par rapport au déplacement de l'organe de préhension (28) de manière que l'organe de préhension (28) soit apte à saisir ou libérer le col (20) de la préforme (12) par coulissement vertical de la préforme (12) en position de préhension relativement à l'organe de préhension (28) lors d'une opération de préhension ou de libération de la préforme intervenant audit au moins un point d'intersection (P3, P4) des trajectoires précitées,
la trajectoire des moyens de réception (42) et la trajectoire des organes de préhension (28) en projection plane étant superposées et synchronisées le long d'au moins une ligne d'intersection (P3-P1, P2-P4) de manière que la préforme (12) soit maintenue dans sa position de préhension tout au long de la ligne d'intersection (P3-P1, P2-P4),
**caractérisé en ce que**
la trajectoire des organes de préhension (28) le long de la ligne d'intersection (P3-P1, P2-P4) est circulaire autour d'un axe de rotation vertical d'entraînement (D), les moyens de réception (42) étant agencés à la périphérie d'un plateau rotatif (32) dont l'axe de rotation (D) correspond audit axe de rotation vertical d'entraînement.

2. Dispositif de chargement (10) ou de déchargement (58) selon la revendication précédente, **caractérisée en ce que** les organes de préhension (28) sont montés coulissant verticalement par rapport à la préforme (12) entre une position haute de préhension et une position basse de transfert.

3. Dispositif de chargement (10) ou de déchargement (28) selon la revendication 1, **caractérisée en ce que** les moyens de réception (42) des préformes (12) sont montés coulissant verticalement de manière à faire coulisser les préformes (12) entre une position basse de transfert dans laquelle la préforme (12) est dégagée de l'organe de préhension (28) et une position haute de préhension dans laquelle la préforme (12) est saisie par l'organe de préhension (28).

4. Dispositif de chargement (10) ou de déchargement (28) selon l'une quelconque des revendications précédentes, **caractérisé en ce qu'**il comporte des moyens de commande (46, 48) du coulissement des moyens de réception (42) par rapport à l'organe de préhension de manière que le coulissement des moyens de réception (42) par rapport à l'organe de préhension associé d'une position vers l'autre s'effectue progressivement tout au long de la ligne d'intersection (P3-P1, P2-P4).

5. Dispositif de chargement (10) ou de déchargement (58) selon l'une quelconque des revendications précédentes, **caractérisé en ce que** l'élément de transport est une chaîne sans fin (14) dont une portion courbe (14A) est enroulée autour d'une roue d'entraînement (32), et **en ce que** le plateau est formé par la roue d'entraînement (32).

6. Dispositif de chargement (10) ou de déchargement (58) selon l'une quelconque des revendications précédentes, **caractérisé en ce que** les moyens de réception sont des pinces (42) qui est apte à saisir le récipient (12) par son col (20) par emboîtement élastique réversible de la préforme (12) dans la pince (42).

7. Dispositif de chargement (10) selon l'une quelconque des revendications précédentes, du type qui comporte des moyens pour éjecter des préformes (12) qui sont mal prises par les organes de préhension, **caractérisé en ce que** les moyens d'éjection comportent des moyens pour commander sélectivement l'opération de libération des préformes mal prises (12) par rapport à l'organe de préhension (28), les préformes mal prises (12) étant sélectivement libérées de l'emprise de l'organe de préhension (28) sur un tronçon aval de la ligne d'intersection (P3-P1) en étant maintenues par les moyens de réception (42).

8. Dispositif de chargement (10) selon la revendication précédente, **caractérisé en ce que** les moyens d'éjection comportent des moyens (68) pour faire tomber les préformes mal prises (12) qui sont en position basse de transfert après l'opération de libération.

9. Dispositif de chargement (10) selon la revendication précédente, **caractérisé en ce que** les moyens d'éjection comportent un sabre (68) qui est interposé sur la trajectoire du corps (16) des préformes (12) en position basse de transfert après l'opération de libération.

## Claims

1. A device for loading (10) or unloading (58) containers (12) comprising a neck (20), and in particular preforms made of thermoplastic material, onto a transporting element (14) which comprises at least one individual member (28) for grasping a preform (12) by its neck (20), and which is able to transport the preform (12) along a horizontal transport path, the loading (10) or unloading (58) device comprising:
- means of distributing (32, 42) the preforms (12) which comprise individual reception means (42) for each preform (12) so as to lead each preform (12) in turn along a distribution path in such a way that the path of the reception means (42) and the path of the grasping members (28), in planar projection, are tangential at at least one point of intersection (P3, P4) in which the preform (12) occupies a grasping position in which the neck (20) of the preform (12) is positioned vertically with respect to the grasping member (28),
- means for synchronizing the movement of the reception means (42) relative to the movement of the grasping member (28) so that the grasping member (28) is able to catch or release the neck (20) of the preform (12) by vertically sliding the preform (12) into the grasping position relative to the grasping member (28) in an operation to grasp or release the preform that occurs at said at least one point of intersection (P3, P4) of the abovementioned paths,
the path of the reception means (42) and the path of the grasping members (28) in planar projection being superimposed and synchronized along at least one line of intersection (P3-P1, P2-P4) so that the preform (12) is held in its grasping position all along the line of intersection (P3-P1, P2-P4),
**characterized in that** the path of the grasping members (28) along the line of intersection (P3-P1, P2-P4) is circular about a driving vertical rotation axis (D), the reception means (42) being positioned at the periphery of a rotating plate (32), the rotation axis (D) of which corresponds to said driving vertical rotation axis.

2. The device for loading (10) or unloading (58) as claimed in the preceding claim, **characterized in that** the grasping members (28) are mounted to slide vertically relative to the preform (12) between a top grasping position and a bottom transfer position.

3. The device for loading (10) or unloading (28) as claimed in claim 1, **characterized in that** the reception means (42) of the preforms (12) are mounted to slide vertically so as to slide the preforms (12) between a bottom transfer position in which the preform (12) is released from the grasping member (28) and a top grasping position in which the preform (12) is caught by the grasping member (28).

4. The device for loading (10) or unloading (28) as claimed in any one of the preceding claims, **characterized in that** it comprises means (46, 48) of controlling the sliding of the reception means (42) relative to the grasping member so that the sliding of the reception means (42) relative to the associated grasping member from one position to the other is performed progressively all along the line of intersection (P3-P1, P2-P4).

5. The device for loading (10) or unloading (58) as claimed in any one of the preceding claims, **characterized in that** the transporting element is an endless chain (14), a curved portion (14A) of which is wound around a drive wheel (32), and **in that** the plate is formed by the drive wheel (32).

6. The device for loading (10) or unloading (58) as claimed in any one of the preceding claims, **characterized in that** the reception means are clamps (42) which is able to catch the container (12) by its neck (20) by reversible elastic fitting of the preform (12) in the clamp (42).

7. The loading device (10) as claimed in any one of the preceding claims, of the type which comprises means for ejecting preforms (12) which are incorrectly held by the grasping members, **characterized in that** the ejection means comprise means for selectively controlling the operation to release the incorrectly held preforms (12) relative to the grasping member (28), the incorrectly held preforms (12) being selectively released from the grasp of the grasping member (28) on a downstream section of the line of intersection (P3-P1) while being held by the reception means (42).

8. The loading device (10) as claimed in the preceding claim, **characterized in that** the ejection means comprise means (68) for dropping the incorrectly held preforms (12) which are in the bottom transfer position after the releasing operation.

9. The loading device (10) as claimed in the preceding claim, **characterized in that** the ejection means comprise an arm (68) which is inserted into the path of the body (16) of the preforms (12) in the bottom transfer position after the releasing operation.

## Patentansprüche

1. Vorrichtung zum Laden (10) oder Entladen (58) von Behältern (12) mit einem Hals (20) und insbesondere Vorformen aus thermoplastischem Material auf ein Transportelement (14), die mindestens ein einzelnes Greifelement (28) einer Vorform (12) über seinen Hals (20) aufweist, und die die Vorform (12) entlang einem horizontalen Transportweg transportieren kann, wobei die Vorrichtung zum Laden (10) oder Entladen (58) folgendes aufweist:
- Verteilelemente (32, 42) für die Vorformen (12), die Elemente zur individuellen Aufnahme (42) jeder Vorform (12) aufweisen, so dass jede Vorform (12) nacheinander entlang einem Verteilweg geführt wird, so dass sich der Weg der Aufnahmeelemente (42) und der Weg der Greifelemente (28) in der ebenen Projektion in mindestens einem Schnittpunkt (P3, P4) berühren, in dem die Vorform (12) eine Greifposition einnimmt, in der der Hals (20) der Vorform (12) vertikal gegenüber dem Greifelement (28) angeordnet ist,
- Elemente zur Synchronisation der Bewegung der Aufnahmeelemente (42) gegenüber der Bewegung des Greifelementes (28), so dass das Greifelement (28) den Hals (20) der Vorform (12) durch vertikale Verschiebung der Vorform (12) in der Greifposition bezüglich des Greifelementes (28) beim Greifen oder Freigeben der Vorform erfassen oder loslassen kann, was mindestens an einem Schnittpunkt (P3, P4) der vorgenannten Wege auftritt,
wobei der Weg der Aufnahmeelemente (42) und der Weg der Greifelemente (28) in der ebenen Projektion entlang mindestens einer Schnittlinie (P3-P1, P2-P4) überlagert und synchronisiert wird, so dass die Vorform (12) entlang der gesamten Schnittlinie (P3-P1, P2-P4) in ihrer Greifposition gehalten wird,
**dadurch gekennzeichnet,**
**dass** der Weg der Greifelemente (28) entlang der Schnittlinie (P3-P1, P2-P4) kreisförmig um eine vertikale Antriebsachse (D) herum verläuft, wobei die Aufnahmeelemente (42) an dem Umfang einer Drehplatte (32) angeordnet sind, deren Drehachse (D) der vertikalen Antriebsachse entspricht.

2. Vorrichtung zum Laden (10) oder Entladen (58) nach dem vorhergehenden Anspruch, **dadurch gekennzeichnet, dass** die Greifelemente (28) gegenüber der Vorform (12) vertikal verschiebbar zwischen einer oberen Greifposition und einer unteren Übertragungsposition montiert sind.

3. Vorrichtung zum Laden (10) oder Entladen (58) nach Anspruch 1, **dadurch gekennzeichnet, dass** die Aufnahmeelemente (42) der Vorformen (12) vertikal verschiebbar montiert sind, so dass die Vorformen (12) zwischen einer unteren Übertragungsposition, in der die Vorform (12) von dem Greifelement (28) abgetrennt ist, und einer oberen Greifposition, in der die Vorform (12) von dem Greifelement (28) erfasst ist, verschoben werden können.

4. Vorrichtung zum Laden (10) oder Entladen (58) nach einem der vorhergehenden Ansprüche, **dadurch gekennzeichnet, dass** sie Steuerungseinrichtungen (46, 48) zum Verschieben der Aufnahmeelemente (42) gegenüber dem Greifelement besitzt, so dass das Verschieben der Aufnahmeelemente (42) gegenüber dem Greifelement, das von einer Position zur anderen verbunden wird, nach und nach entlang der Schnittlinie (P3 - P1, P2 - P4) erfolgt.

5. Vorrichtung zum Laden (10) oder Entladen (58) nach einem der vorhergehenden Ansprüche, **dadurch gekennzeichnet, dass** es sich bei dem Transportelement um eine endlose Kette (14) handelt, deren gebogener Abschnitt (14A) um ein Antriebsrad (32) herum gewickelt ist, und dass die Platte durch das Antriebsrad (32) gebildet wird.

6. Vorrichtung zum Laden (10) oder Entladen (58) nach einem der vorhergehenden Ansprüche, **dadurch gekennzeichnet, dass** es sich bei den Aufnahmeelementen um Greiferklemmen (42) handelt, die den Behälter (12) über seinen Hals (20) greifen können, und zwar durch reversibles, elastisches Ineinanderstecken der Vorform (12) in die Greiferklemme (42).

7. Vorrichtung zum Laden (10) nach einem der vorhergehenden Ansprüche, die Einrichtungen zum Auswerfen der Vorformen (12) besitzt, welche von den Greifelementen falsch gegriffen worden sind, **dadurch gekennzeichnet, dass** die Auswurfeinrichtungen Elemente aufweisen, um die Freigabe von falsch gegriffenen Vorformen (12) gegenüber dem Greifelement (28) selektiv zu steuern, wobei die falsch gegriffenen Vorformen (12) an einem Abschnitt hinter der Schnittlinie (P3 - P1) aus dem Griff des Greifelementes selektiv losgelassen werden, wobei sie von den Aufnahmeelementen (42) gehalten werden.

8. Vorrichtung zum Laden (10) nach dem vorhergehenden Anspruch, **dadurch gekennzeichnet, dass** die Auswurfeinrichtungen Elemente (68) aufweisen, um die falsch gegriffenen Vorformen (12), die sich nach dem Loslassen in der unteren Übertragungsposition befinden, fallen zu lassen.

9. Vorrichtung zum Laden (10) nach dem vorhergehenden Anspruch, **dadurch gekennzeichnet, dass** die Auswurfeinrichtungen einen Schlagarm (sabre) (68) aufweisen, der auf der Bahn des Hauptteils (16) der Vorformen (12) in der unteren Übertragungsposition nach dem Loslassen eingeschoben ist.
